# EUROPEAN PATENT APPLICATION

(11) **EP 4 795 913 A1**
(43) Date of publication of application: **26.08.2026**
(21) Application number: 26159434.5
(22) Date of filing: 18.02.2026
(51) Int. Cl.: A01B 69/04, A01B 76/00, G06Q 50/02

(54) **POWER SUPPLY CONTROL METHOD, POWER SUPPLY CONTROL PROGRAM, AND POWER SUPPLY CONTROL SYSTEM**

(30) Priority: 19.02.2025 JP 2025024963; 19.11.2025 JP 2025198991
(71) Applicant: Yanmar Holdings Co., Ltd., Osaka (JP)
(72) Inventor: MIYAMOTO, Shinnosuke, Okayama-shi (JP)
(74) Representative: Sekiguchi, Kazuya

(57) **Abstract**

[Problem] Provided are a power supply control method, a power supply control program, and a power supply control system capable of retaining information regarding automatic traveling even in a case where a key of a work vehicle is temporarily switched to an OFF state.

[Solution] A vehicle control device 11 includes a storage processing unit 112 that stores information regarding automatic traveling in a storage unit 115 by using power supplied from a battery 18 in a case where a key switch of a work vehicle 1 is in an ON state, and a retention processing unit 114 that continues supply of power to the storage unit 115 when predetermined conditions for starting automatic traveling are satisfied and stops the supply of power to the storage unit 115 when the predetermined conditions are not satisfied in a case where the key switch is switched to an OFF state.

## Description

### TECHNICAL FIELD

The present invention relates to a technique for controlling a power supply of a work vehicle capable of automatic traveling.

### BACKGROUND ART

In recent years, with the progress of automation technology of agricultural machines, a work vehicle that performs work while automatically traveling in a field has been introduced. For example, an operator sets in advance information regarding automatic traveling such as a reference line serving as a reference for automatic traveling, and a work vehicle performs automatic traveling on the basis of the stored information (see, for example, Patent Document 1).

### PRIOR ART DOCUMENT

### PATENT DOCUMENT

Patent Document 1: JP-B-7203654

### SUMMARY OF INVENTION

### TECHNICAL PROBLEM

Incidentally, there is a case where an operator turns off a key switch for starting an engine of a work vehicle when suspending work of the work vehicle or performing maintenance of the work vehicle. When the key switch is turned off, power from a battery (power supply) is not supplied to a storage unit. Therefore, depending on the type of the storage unit, information regarding automatic traveling cannot be retained in the storage unit, and the operator has to turn on the key switch again when the automatic traveling is performed to reset the information regarding automatic traveling.

An object of the present invention is to provide a power supply control method, a power supply control program, and a power supply control system capable of retaining information regarding automatic traveling even when an engine key of a work vehicle is temporarily turned off.

### SOLUTION TO PROBLEM

A power supply control method according to the present invention includes storing information regarding automatic traveling in a storage unit by using power supplied from a battery in a case where a switch of a work vehicle is in an ON state, and continuing supply of the power to the storage unit when predetermined conditions for starting automatic traveling are satisfied and stopping the supply of the power to the storage unit when the predetermined conditions are not satisfied, in a case where the switch is switched to an OFF state.

A power supply control method according to the present invention includes storing positioning information in a positioning device by using power supplied from a battery in a case where a switch of a work vehicle is in an ON state, and continuing supply of the power to the positioning device when predetermined conditions for starting automatic traveling are satisfied and stopping the supply of the power to the positioning device when the predetermined conditions are not satisfied, in a case where the switch is switched to an OFF state.

A power supply control method according to the present invention includes storing information regarding automatic traveling in a storage unit by using power supplied from a battery in a case where a switch of a work vehicle is in an ON state, receiving an operation of enabling or disabling a function of continuing supply of the power to the storage unit in a case where the switch is switched to an OFF state, and continuing the supply of the power to the storage unit when the switch is switched to the OFF state in a case where the operation of enabling the function is received, and stopping the supply of the power to the storage unit when the switch is switched to the OFF state in a case where the operation of disabling the function is received.

A power supply control program according to the present invention is a program for causing one or a plurality of processors to execute storing information regarding automatic traveling in a storage unit by using power supplied from a battery in a case where a switch of a work vehicle is in an ON state, and continuing supply of the power to the storage unit when predetermined conditions for starting automatic traveling are satisfied and stopping the supply of the power to the storage unit when the predetermined conditions are not satisfied, in a case where the switch is switched to an OFF state.

A power supply control system according to the present invention includes a storage processing unit and a retention processing unit. The storage processing unit stores information regarding automatic traveling in a storage unit by using power supplied from a battery in a case where a switch of a work vehicle is in an ON state. The retention processing unit continues supply of the power to the storage unit when predetermined conditions for starting automatic traveling are satisfied and stops the supply of the power to the storage unit when the predetermined conditions are not satisfied, in a case where the switch is switched to an OFF state.

### ADVANTAGEOUS EFFECTS OF INVENTION

According to the present invention, it is possible to provide a power supply control method, a power supply control program, and a power supply control system capable of retaining information regarding automatic traveling even when a key of a work vehicle is temporarily turned off.

### BRIEF DESCRIPTION OF DRAWINGS

Fig. 1 is a block diagram showing a configuration of a work vehicle according to an embodiment of the present invention;
Fig. 2 is an external view showing an example of a work vehicle according to the embodiment of the present invention;
Fig. 3 is a diagram showing an example of a field and a target route according to the embodiment of the present invention;
Fig. 4 is a diagram showing an example of a field and a target route according to the embodiment of the present invention;
Fig. 5 is an example of a circuit diagram showing the supply of power from a battery to electrical components in the work vehicle according to the embodiment of the present invention;
Fig. 6 is an example of a circuit diagram showing the supply of power from the battery to electrical components in the work vehicle according to the embodiment of the present invention;
Fig. 7 is an example of a circuit diagram showing the supply of power from a battery to electrical components in the work vehicle according to the embodiment of the present invention;
Fig. 8 is a diagram showing an example of a setting screen displayed on an operation device according to the embodiment of the present invention;
Fig. 9A is a diagram showing an example of a setting screen displayed on the operation device according to the embodiment of the present invention;
Fig. 9B is a diagram showing an example of a setting screen displayed on the operation device according to the embodiment of the present invention;
Fig. 10 is a diagram showing an example of a setting screen displayed on the operation device according to the embodiment of the present invention;
Fig. 11 is a flowchart showing an example of a procedure of a power supply control process executed in the work vehicle according to the embodiment of the present invention;
Fig. 12 is a block diagram showing a configuration of a work vehicle according to still another embodiment of the present invention;
Fig. 13 is a diagram showing an example of a travel screen displayed on an operation device according to still another embodiment of the present invention;
Fig. 14 is a diagram showing an example of a travel screen displayed on an operation device according to still another embodiment of the present invention; and
Fig. 15 is a diagram showing an example of a travel screen displayed on an operation device according to still another embodiment of the present invention.

### DESCRIPTION OF EMBODIMENTS

The following embodiment is an embodied example of the present invention, and does not limit the technical scope of the present invention.

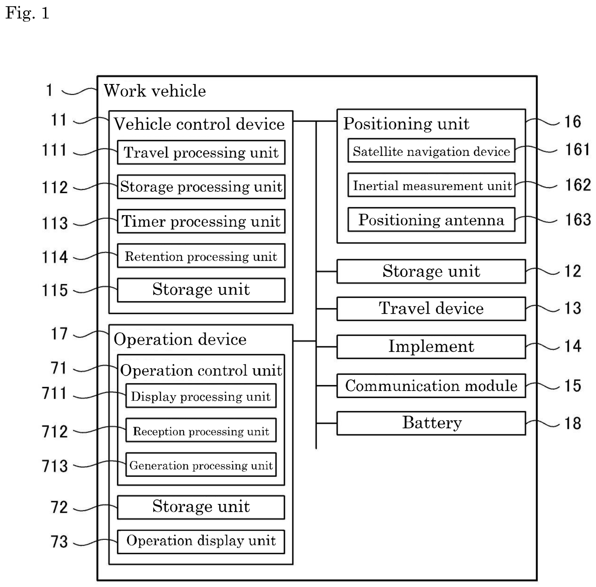

As shown in Fig. 1, a work vehicle 1 according to an embodiment of the present invention is an automatic traveling vehicle that includes a positioning unit 16 and is capable of automatically traveling (autonomously traveling) in a field along a preset travel route (target route) on the basis of positioning information from the positioning unit 16.

In the present embodiment, a case where the work vehicle 1 is a tractor will be described as an example. Note that, as another embodiment, the work vehicle 1 may be a rice transplanter, a combine harvester, a construction machine, a snowplow, or the like. The work vehicle 1 has a configuration capable of automatically traveling in a field registered in advance. For example, an operator (user) registers a work target field, and sets a target route along which the work vehicle 1 automatically travels for the field. The work vehicle 1 automatically travels along the target route set in advance for the field on the basis of position information of the current position of the work vehicle 1 calculated by the positioning unit 16. The work vehicle 1 performs predetermined work while automatically traveling in the field.

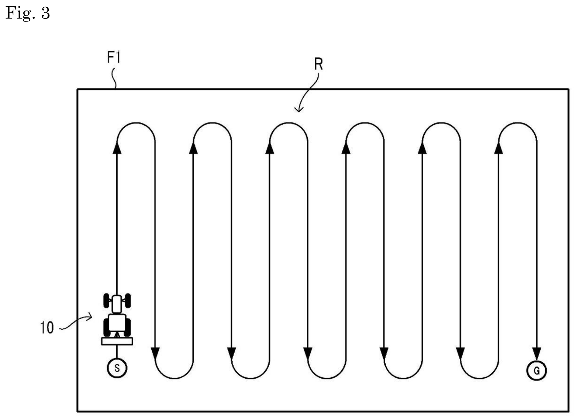

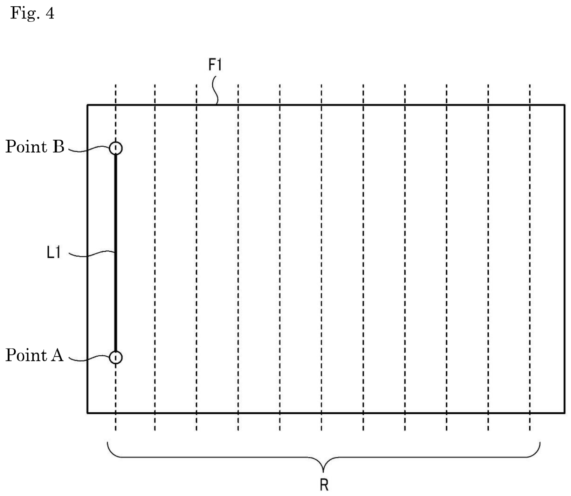

For example, the work vehicle 1 automatically travels along a target route R in a field F1 shown in Fig. 3. Specifically, the work vehicle 1 performs work while automatically traveling along the target route R from a work start position S to a work end position G. The target route R includes a work route and a non-work route (a moving route, a turning route, or the like). The work start position S and the work end position G can be set to any positions in the field F1. The target route R is not limited to the route shown in Fig. 3, and is set as appropriate according to the work content. For example, as shown in Fig. 4, the target route R may include only a linear route (work route) parallel to a reference line L1 set according to a registration operation of the operator without including a non-work route.

An operation device 17 is an operation terminal that registers the field F1, sets the target route R, receives instructions for starting and stopping the automatic traveling from the operator, and displays a work status during the automatic traveling. The operator can bring the operation device 17 into the work vehicle 1 and operate the operation device or operate the operation device 17 outside the work vehicle 1.

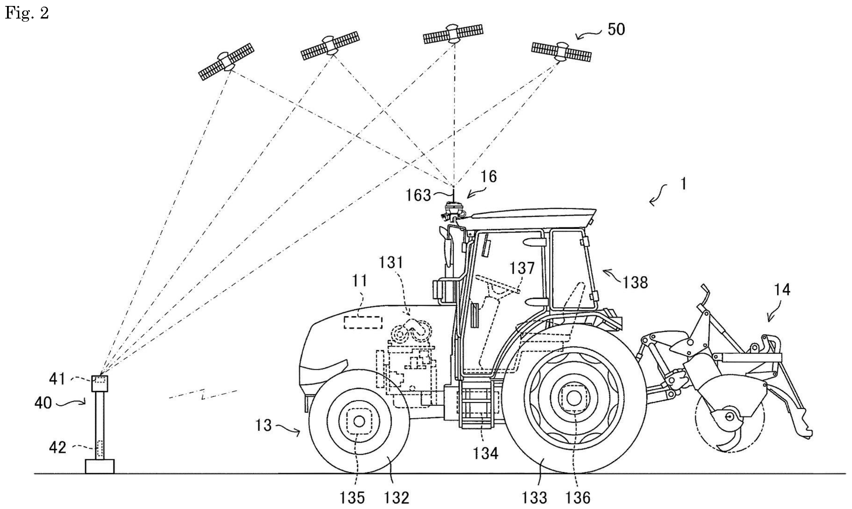

Incidentally, there is a case where the operator performs an OFF operation of a key switch for starting an engine 131 (see Fig. 2) of the work vehicle 1 when suspending the work of the work vehicle 1 or performing maintenance of the work vehicle 1. When the key switch is turned off, power from a battery 18 is not supplied to a storage unit (vehicle control device). Therefore, depending on the type of the storage unit, information regarding automatic traveling cannot be retained in the storage unit, and when automatic traveling is performed, it is necessary to turn on the key switch again and reset the information regarding automatic traveling. In contrast, as described below, the work vehicle 1 according to the present embodiment has a configuration capable of retaining information regarding automatic traveling even when the engine key of the work vehicle 1 is temporarily turned off.

### [Work vehicle 1]

As shown in Figs. 1 and 2, the work vehicle 1 includes a vehicle control device 11, a storage unit 12, a travel device 13, an implement 14, a communication module 15, a positioning unit 16, an operation device 17, a battery 18, and the like. The vehicle control device 11 is electrically connected to the storage unit 12, the travel device 13, the implement 14, the communication module 15, the positioning unit 16, the operation device 17, the battery 18, and the like. Note that the vehicle control device 11 and the positioning unit 16 may be capable of wireless communication. The vehicle control device 11 and the operation device 17 may be capable of wireless communication.

The communication module 15 is a communication interface for connecting the work vehicle 1 to a communication network in a wired or wireless manner and performing data communication according to a predetermined communication protocol with an external device such as a base station 40 (see Fig. 2) via the communication network. The work vehicle 1 may be capable of performing wireless communication with the operation device 17 via the communication module 15. In addition, the work vehicle 1 can perform wireless communication of various types of information including positioning information (correction information) with the base station 40 via the communication module 15. That is, the communication module 15 functions as a correction terminal in real time kinematic GNSS (RTK-GNSS).

The travel device 13 is a drive unit that causes the work vehicle 1 to travel. As shown in Fig. 2, the travel device 13 includes an engine 131, front wheels 132, rear wheels 133, a transmission 134, a front axle 135, a rear axle 136, a steering wheel 137, and the like. Note that the front wheels 132 and the rear wheels 133 are provided on the left and right of the work vehicle 1. In addition, the travel device 13 is not limited to a wheel type including the front wheel 132 and the rear wheel 133, and may be of a crawler type including crawlers provided on the left and right of the work vehicle 1.

The engine 131 is a drive source such as a diesel engine or a gasoline engine driven by using a fuel supplied to a fuel tank (not shown). The travel device 13 may include an electric motor as a drive source together with the engine 131 or instead of the engine 131. A generator (not shown) is connected to the engine 131, and power is supplied from the generator to electric components such as the vehicle control device 11 and the battery 18 provided in the work vehicle 1.

The battery 18 is charged with power supplied from the generator. The battery 18 supplies power to electrical components such as the vehicle control device 11, the positioning unit 16, the communication module 15, and the operation device 17.

A drive force of the engine 131 is transmitted to the front wheels 132 via the transmission 134 and the front axle 135, and is transmitted to the rear wheels 133 via the transmission 134 and the rear axle 136. Further, a drive force of the engine 131 is also transmitted to the implement 14 via a PTO shaft (not shown). In a case where the work vehicle 1 performs automatic traveling, the travel device 13 performs a travel operation according to a command from the vehicle control device 11.

The implement 14 is, for example, a tiller, a mower, a plow, a fertilizing machine, a seeder, or a spreader, and is attachable to and detachable from the work vehicle 1. Thus, the work vehicle 1 can perform various types of work by using any of the implements 14. Fig. 2 shows a case where the implement 14 is a tiller.

The implement 14 may be supported in the work vehicle 1 to be able to be lifted and lowered by a lifting/lowering mechanism (not shown). The vehicle control device 11 can lift and lower the implement 14 by controlling the lifting/lowering mechanism. For example, the vehicle control device 11 lowers the implement 14 in a case where the work vehicle 1 is traveling straight in a forward direction on the work route, and lifts the implement 14 in a case where the work vehicle 1 is turning. In the case of acquiring a work stop instruction, the vehicle control device 11 outputs a work stop command to the implement 14. For example, the vehicle control device 11 acquires a stop instruction from the operation device 17 when the operator performs a stop instruction operation on the operation device 17. In the case of acquiring the work stop instruction, the vehicle control device 11 stops the driving of the PTO shaft and stops the work of the implement 14.

The steering wheel 137 is an operation unit operated by the operator or the vehicle control device 11. For example, in the travel device 13, an angle of the front wheel 132 is changed by a hydraulic power steering mechanism (not shown) or the like in accordance with an operation of the steering wheel 137 by the vehicle control device 11, and an advancing direction of the work vehicle 1 is changed. In a case where the operator performs a teaching operation when registering the field F1, the operator operates the steering wheel 137 to cause the work vehicle 1 to manually travel. When moving the work vehicle 1 to the work start position S (such as the starting end of the work route), the operator operates the steering wheel 137 to cause the work vehicle 1 to manually travel.

In addition to the steering wheel 137, the travel device 13 includes a shift lever, an accelerator, a brake, and the like (not shown) operated by the vehicle control device 11. In the travel device 13, a gear of the transmission 134 is switched to a forward gear, a back gear, or the like in accordance with an operation of the shift lever by the vehicle control device 11, and a traveling mode of the work vehicle 1 is switched to forward or backward. The vehicle control device 11 operates the accelerator to control a rotation speed of the engine 131. The vehicle control device 11 operates the brake to brake the rotation of the front wheels 132 and the rear wheels 133 by using an electromagnetic brake.

As shown in Fig. 2, the positioning unit 16 includes a satellite navigation device that measures a current position and a current azimuth of the work vehicle 1 by using a global positioning system (GPS) that is an example of a navigation satellite system (NSS), an inertial measurement unit (IMU) 23 that has a three-axis gyroscope, a three-direction acceleration sensor, and the like and measures an attitude, an azimuth, and the like of the work vehicle 1, and the like. Positioning methods using a GPS include a differential GPS (DGPS) and a real time kinematic GPS (RTK-GPS). The positioning unit 16 may adopt a positioning method using a GNSS. In the present embodiment, an RTK-GNSS suitable for positioning of a moving object is adopted. Therefore, as shown in Fig. 2, a base station 40 (reference station) that enables positioning by RTK-GNSS is installed at a known position around the field.

As shown in Fig. 2, the work vehicle 1 and the base station 40 respectively include, for example, a positioning antenna 163 and a base station antenna 41 that receive a radio wave transmitted from a positioning satellite 50, and the communication module 15 (see Fig. 1) and a base station communication module 42 that enable wireless communication of various types of information including positioning information (correction information) between the work vehicle 1 and the base station 40. As a result, the satellite navigation device 161 can measure the current position and the current azimuth of the work vehicle 1 with high accuracy on the basis of the positioning information obtained by the positioning antenna 163 on the work vehicle side receiving the radio waves from the positioning satellites 50 and the positioning information (correction information for measuring the current position of the work vehicle 1) obtained by the base station antenna 41 on the base station side receiving the radio waves from the positioning satellites 50. In addition, the positioning unit 16 includes the satellite navigation device 161 and the inertial measurement device 162, so that the current position, the current azimuth, and the attitude angle (a yaw angle, a roll angle, and a pitch angle) of the work vehicle 1 can be measured with high accuracy.

Note that, as the positioning unit 16, for example, a mobile phone, a smartphone, a tablet terminal, or a quantum compass may be substituted.

The operation device 17 is a device operated by the operator boarding the work vehicle 1, and displays various types of information and receives an operation of the operator. Specifically, the operation device 17 displays various setting screens to receive various setting operations from the operator, and displays information regarding the traveling work vehicle 1. The operation device 17 is installed, for example, near the steering wheel 137 in a driver's seat 138.

As shown in Fig. 1, the operation device 17 includes an operation control unit 71, a storage unit 72, an operation display unit 73, and the like. The operation device 17 may be a device attachable to and detachable from the work vehicle 1. The operation device 17 may be a portable terminal (a tablet terminal, a smartphone, etc.) that can be carried by the operator. The operation device 17 is communicatively connected to the vehicle control device 11 in a wired or wireless manner.

The operation display unit 73 is a user interface including a display unit such as a liquid crystal display or an organic EL display that displays various types of information, and an operation unit such as an operation button or a touch panel that receives an operation. The operation display unit 73 displays various setting screens, work screens, and the like in response to instructions from the operation control unit 71. The operation display unit 73 receives an operation of the operator on the setting screens and the work screens.

In addition, the operation unit includes an automatic traveling button with which an operator gives a traveling start instruction when causing the work vehicle 1 to start automatic traveling, a route shift button for performing a correction operation (shift operation) for correcting a positional deviation between the work vehicle 1 and the target route R, and a plurality of selection buttons for performing a selection operation on the setting screen and the work screen (none of which are shown). These operation buttons may be physical buttons or electronic image buttons displayed on a touch panel.

The storage unit 72 is a non-volatile storage unit such as a hard disk drive (HDD), a solid state drive (SSD), or a flash memory that stores various types of information. The storage unit 72 stores a control program for causing the operation control unit 71 to execute various processes (for example, a display process and a route generation process). For example, the control program is non-temporarily recorded on a computer-readable recording medium such as a flash ROM, an EEPROM, a CD, or a DVD, and is read by a predetermined reading device (not shown) and stored in the storage unit 72.

The operation control unit 71 includes various processing units such as a display processing unit 711, a reception processing unit 712, and a generation processing unit 713.

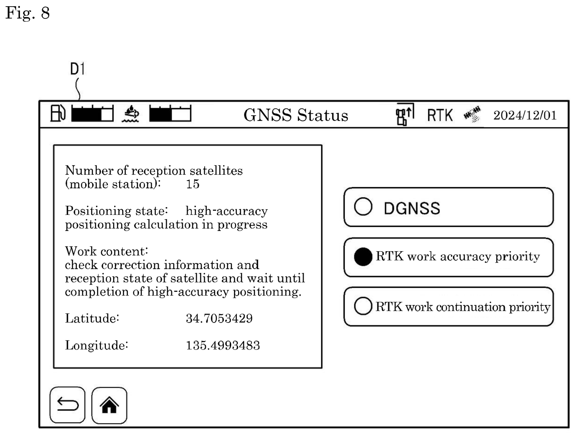

The display processing unit 711 displays various types of information on the operation display unit 73. For example, the display processing unit 711 displays, on the operation display unit 73, setting screens (for example, setting screens D1 and D2 in Figs. 8 to 10) for performing various settings, a traveling screen (not shown) including traveling information such as a traveling status and a work status of the work vehicle 1, and the like.

The reception processing unit 712 receives various operations of the operator. For example, the reception processing unit 712 receives, on the setting screen, operations for generating the target route R (see Figs. 3 and 4), the reference line L1 (see Fig. 4), and the like, that is, various operations related to route generation work from the operator.

The generation processing unit 713 generates the target route R (see Figs. 3 and 4). For example, as shown in Fig. 4, the generation processing unit 713 generates the target route R including the reference line L1 that is set according to a setting operation of the operator. Specifically, the generation processing unit 713 generates the target route R including a plurality of straight routes arranged at equal intervals on the basis of the reference line L1 passing through the point A (first reference point) and the point B (second reference point) in the field F1.

Hereinafter, an example of a procedure of generating the target route R shown in Fig. 4 will be described. The generation processing unit 713 receives a setting operation of setting the reference line L1 from the operator. For example, the operator registers the point A by moving the work vehicle 1 to any position (for example, a target position at which the work starts (work start target position)) of the outer peripheral end portion of the field F1. When the operator registers the point A, the generation processing unit 713 registers the current position of the work vehicle 1 as a first reference point (point A). Next, the operator causes the work vehicle 1 to manually travel in a direction (target direction) in which the operator wants the work vehicle 1 to travel and to perform work. Specifically, the operator causes the work vehicle 1 to travel straight in a direction parallel to a working direction when the work vehicle 1 performs work in a work region. The operator registers a second reference point (point B) at any position (for example, the outer peripheral end portion of the field F1). For example, the operator moves the work vehicle 1 to a target position of the outer peripheral end portion of the field F1 at which the work is ended (work end target position), and registers the point B. When acquiring the position information of the points A and B, the generation processing unit 713 sets a straight line passing through the points A and B as the reference line L1, and generates a travel route (target route R) including the reference line L1 and a plurality of straight lines parallel to the reference line L1. The generation processing unit 713 generates a plurality of straight lines parallel to the reference line L1 and arranged at equal intervals on the basis of a preset work width (a lateral width of the implement 14) and a lap width (a width overlapping an adjacent region on which work has been completed) (see Fig. 4). Information regarding the target route R (route information), for example, respective pieces of information such as the positions of the reference points (the point A and the point B), the reference line L1, and the target route R are stored in the storage unit 72. The information regarding the target route R (route information) is read by the vehicle control device 11 and stored in the storage unit 115. Note that each piece of the information regarding the target route R is an example of "information regarding automatic traveling" of the present invention.

After the target route R is generated, the operator instructs the work vehicle 1 to start automatic traveling (travel start instruction) in the field F1. For example, in a case where the work vehicle 1 satisfies automatic traveling start conditions and is in a state of being able to perform automatic traveling, the operator can give a travel start instruction by pressing the automatic traveling button (not shown) of the operation display unit 73.

When the work vehicle 1 satisfies the automatic traveling start conditions and the operator gives a traveling start instruction, the vehicle control device 11 receives the traveling start instruction and starts automatic steering of the work vehicle 1 to cause the work vehicle 1 to follow the target route R. As a result, the vehicle control device 11 causes the work vehicle 1 to automatically travel along the straight route of the target route R through automatic steering.

Note that the vehicle control device 11 may end the automatic steering at the end of each straight route. For example, the vehicle control device 11 notifies the operator that the work vehicle 1 travels straight on the straight route through the automatic steering and approaches a position (work end target position) obtained by moving in parallel the end (for example, the end of the reference line L1 (the point B, which is the work end target position)) of an (immediately preceding) straight route that is adjacent to the straight route and on which the work has been completed, and ends the automatic steering in response to an operation of the operator.

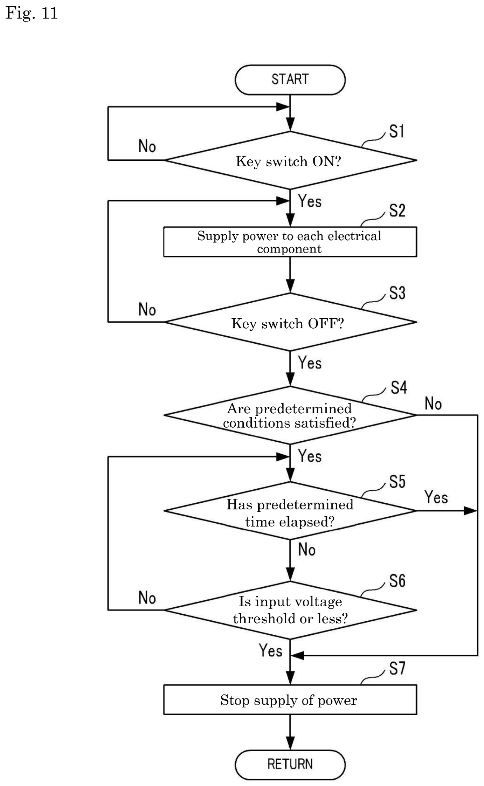

The storage unit 12 is a non-volatile storage unit such as an HDD, an SSD, or a flash memory that stores various types of information. The storage unit 12 stores control programs such as a power supply control program for causing the vehicle control device 11 to execute a power supply control process (see Fig. 11) that will be described later and an automatic traveling program for causing the vehicle control device 11 to execute an automatic traveling process. The control programs are non-temporarily recorded in a computer-readable recording medium such as a flash ROM, an EEPROM, a CD, or a DVD, and are read by a predetermined reading device (not shown) and stored in the storage unit 12. The control programs may be downloaded from a server (not shown) to the work vehicle 1 via the communication network N1 and stored in the storage unit 12.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work region) for various types of processing executed by the CPU. The vehicle control device 11 controls the work vehicle 1 by executing, with the CPU, various control programs stored in advance in the ROM or the storage unit 12.

In the present embodiment, the vehicle control device 11 includes a volatile storage unit 115 (for example, a RAM). Information regarding automatic traveling, for example, route information of the target route R for automatic traveling (registration information such as positions of reference points (the point A and the point B), the reference line L1, and the target route R) is stored in the storage unit 115. The "information regarding the automatic traveling" of the present invention is not limited to the information such as the positions of the reference points (the point A and the point B), the reference line L1, and the target route R, and includes various types of setting information necessary for starting, continuing, or resuming the automatic traveling. For example, information regarding a traveling method of automatic traveling such as a vehicle speed and a turning method in automatic traveling may be included. The storage unit 115 stores and retains the information by using power supplied from the battery 18. In addition, in the storage unit 115, when the supply of power is cut off, the stored information is erased. That is, the storage unit 115 is a volatile memory capable of retaining data only while power is supplied.

The vehicle control device 11 controls an operation of the work vehicle 1 according to various user operations on the work vehicle 1. In addition, the vehicle control device 11 executes the automatic traveling process on the work vehicle 1 on the basis of the current position of the work vehicle 1 calculated by the positioning unit 16 and the target route R set in advance.

As shown in Fig. 1, the vehicle control device 11 includes various processing units such as a travel processing unit 111, a storage processing unit 112, a timer processing unit 113, and a retention processing unit 114. Note that the vehicle control device 11 functions as the various processing units by executing various types of processing according to the control program with the CPU. In addition, some or all of the processing units may include an electronic circuit. Note that the control program may be a program for causing one or a plurality of processors to function as the processing unit.

The travel processing unit 111 controls traveling of the work vehicle 1. Specifically, the travel processing unit 111 causes the work vehicle 1 to automatically travel along the target route R (see Figs. 3 and 4) set in the field F1. In addition, the travel processing unit 111 determines whether or not the work vehicle 1 is in a state in which the automatic traveling can be started. For example, the travel processing unit 111 determines whether or not the lateral deviation and the azimuth deviation with respect to the straight route included in the target route R satisfy the automatic traveling start conditions. In a case where the automatic traveling start conditions are satisfied, the travel processing unit 111 determines that the work vehicle 1 is in a state in which the automatic traveling can be started, and permits the start of the automatic traveling. On the other hand, in a case where the automatic traveling start conditions are not satisfied, the travel processing unit 111 determines that the work vehicle 1 is not in a state in which the automatic traveling can be started, and prohibits the start of the automatic traveling.

The storage processing unit 112 stores information regarding the automatic traveling in the storage unit 115. Specifically, the storage processing unit 112 stores, in the storage unit 115, information regarding the automatic traveling set by the operator before starting the automatic traveling. For example, in a case where the operator registers the reference points on the operation device 17, the storage processing unit 112 reads the reference points, and the reference line L1 and the target route R generated on the basis of the reference points from the operation device 17 and stores the reference points and the reference line L1 and the target route R in the storage unit 115. In addition, for example, in a case where the operator selects the field F1 and the target route R on which the work vehicle 1 automatically travels on the operation device 17, the storage processing unit 112 reads the information of the target route R and stores the information in the storage unit 115.

In a case where the key switch (engine key) of the work vehicle 1 is in an ON state, the storage processing unit 112 stores, in the storage unit 115, the information regarding automatic traveling by using power supplied from the battery 18. Note that "storing" includes the meaning of retaining (maintaining), and the storage processing unit 112 retains (maintains) the information regarding the automatic traveling stored in the storage unit 115 by using the power supplied from the battery 18.

### [Power supply retaining function]

The work vehicle 1 has a power supply retaining function capable of retaining the supply of power to each of the vehicle control device 11, the communication module 15, and the positioning unit 16. The vehicle control device 11 has a configuration capable of switching the power supply retaining function between enabled and disabled, and continues (retains the power supply) or stops the supply of power from the battery 18 to the vehicle control device 11, the communication module 15, and the positioning unit 16.

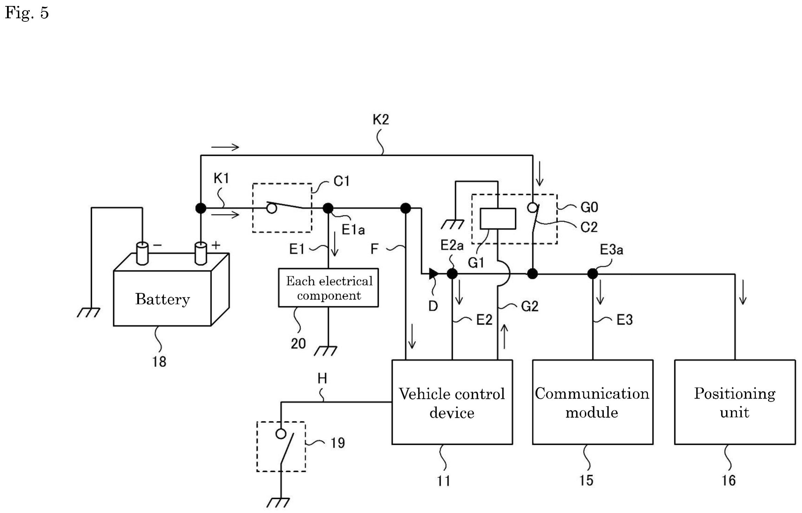

Hereinafter, the power supply retaining function will be described with reference to a circuit diagram of Fig. 5. Fig. 5 shows current flow paths from the battery 18 to various electrical components. The work vehicle 1 is provided with, as electrical components to which power is supplied from the battery 18, various electrical components 20 and the like in addition to the vehicle control device 11, the communication module 15, and the positioning unit 16. As current flow paths from the battery 18 to the positioning unit 16, a first current flow path K1 through which a current can flow to the positioning unit 16 and each electrical component 20 from the battery 18 via a first switch C1 and a second current flow path K2 through which a current can flow to the positioning unit 16 from the battery 18 via a second switch C2 different from the first switch C1 are provided.

The first current flow path K1 is a current flow path that connects the battery 18 and the positioning unit 16. In the first current flow path K1, the first switch C1 is disposed on the most upstream side in the current flow direction. The first switch C1 is configured as a key switch for starting the supply of power to each electrical component 20 and starting the engine 131, and the key switch is disposed near the steering wheel 137 of the driver's seat 138. The first switch C1 is switched between an ON state and an OFF state according to an operation of the operator or the like, switched to an ON state according to an ON operation of the key switch, and switched to an OFF state according to an OFF operation of the key switch. The first switch C1 is an example of a switch of the present invention.

As shown in Fig. 5, first to third branch paths E1 to E3 are branched and connected to the downstream side of the first switch C1 in the first current flow path K1, and are configured to allow currents to flow to the electrical components 20, the vehicle control device 11, and the communication module 15 in addition to the positioning unit 16. The first branch path E1 is branched from the most upstream side in the current flow direction, and is a path connecting the battery 18 and the respective electrical components 20 (electrical components other than the vehicle control device 11, the positioning unit 16, and the communication module 15). The second branch path E2 is branched from the downstream side of a first branch connection point E1a of the first branch path E1 in the current flow direction, and is a path connecting the battery 18 and the vehicle control device 11. The third branch path E3 is branched from the downstream side of a second branch connection point E2a of the second branch path E2 in the current flow direction, and is a path connecting the battery 18 and the communication module 15.

Note that the second branch path E2 connected to the vehicle control device 11 and the third branch path E3 connected to the communication module 15 may be disposed on the upstream side and the downstream side opposite to each other in the current flow direction, and a method in which the second branch path E2 and the third branch path E3 are disposed in the current flow direction may be changed as appropriate.

Between the first branch connection point E1a and the second branch connection point E2a in the first current flow path K1, a diode D is disposed in which the current flow direction is one direction from the first branch connection point E1a side to the second branch connection point E2a side. This prevents a current from flowing from the second branch connection point E2a side to the first branch connection point E1a side in the first current flow path K1.

An ON signal input path F through which an ON signal indicating that the first switch C1 (key switch) is in an ON state is input to the vehicle control device 11 is provided between the first branch connection point E1a and the diode D in the first current flow path K1. As a result, the vehicle control device 11 can ascertain whether the first switch C1 is in an ON state or an OFF state and a timing at which the first switch C1 switches from an ON state to an OFF state on the basis of the ON signal that is input via the ON signal input path F.

The second current flow path K2 is a path that is branched from a midway portion of the first current flow path K1 and joined to a midway portion of the first current flow path K1, and is provided in parallel with the first current flow path K1 while also serving as a part of the first current flow path K1. The second switch C2 is disposed in the second current flow path K2, and the first switch C1 and the second switch C2 are provided in parallel. The second switch C2 is configured as a normally closed switch that is always in an ON state, and is provided with a power supply retaining relay circuit G0 that retains an ON state. The power supply retaining relay circuit G0 is provided with a relay control output path G2 through which a relay control output is output to a coil G1 from the retention processing unit 114 of the vehicle control device 11. The power supply retaining relay circuit G0 retains the second switch C2 in an ON state while the relay control output is output from the retention processing unit 114 to the coil G1 via the relay control output path G2, and switches the second switch C2 to an OFF state when the relay control output from the retention processing unit 114 to the coil G1 is stopped.

The second current flow path K2 is branched from the upstream side of the first switch C1 in the first current flow path K1, and joined between the second branch connection point E2a and a third branch connection point E3a in the first current flow path K1. As a result, the second current flow path K2 allows a current to flow to each of the vehicle control device 11, the positioning unit 16, and the communication module 15 from the battery 18 via the second switch C2. Since the diode D that regulates the current flow direction in one direction is disposed between the first branch connection point E1a and the second branch connection point E2a in the first current flow path K1, the flow of a current to each electrical component 20 is prevented by the second current flow path K2.

Hereinafter, switching of the first switch C1 and the second switch C2 and a current flow state in a state in which the first switch C1 and the second switch C2 are switched in a case where the work vehicle 1 automatically travels to perform work will be described.

In a case where the work vehicle 1 automatically travels, the first switch C1 (key switch) is switched to an ON state. In a case where the first switch C1 is in an ON state, as shown in Fig. 5, a current flows to the positioning unit 16 from the battery 18 through both the first current flow path K1 and the second current flow path K2. That is, when the first switch C1 is in an ON state, the current can flow to the positioning unit 16 from the battery 18 through either the first current flow path K1 or the second current flow path K2. In this case, for example, by adjusting a potential difference or the like, the current can be made to flow through the first current flow path K1 in preference to the second current flow path K2.

When the first switch C1 is in an ON state, as shown in Fig. 5, a current can also flow through each of the first to third branch paths E1 to E3 in the first current flow path K1. As a result, through the first current flow path K1 and the first to third branch paths E1 to E3, a current flows to the positioning unit 16 from the battery 18 and currents also flow to the electrical components 20, the vehicle control device 11, and the communication module 15 from the battery 18. In addition, through the second current flow path K2 and the second and third branch paths E2 and E3, a current flows to the positioning unit 16 from the battery 18, and currents also flow to the vehicle control device 11 and the communication module 15 from the battery 18.

As described above, in a case where the work vehicle 1 automatically travels, the first switch C1 is switched to an ON state, so that the currents can flow to the vehicle control device 11, the positioning unit 16, the communication module 15, and the electrical components 20 from the battery 18 through the first current flow path K1 and the second current flow path K2. Therefore, the electrical components 20 are put into a usable state, and the communication module 15 receives, in addition to the positioning information obtained by the positioning antenna 163 on the work vehicle 1 side receiving the radio waves from the positioning satellite 50, the correction information obtained by the base station antenna 41 on the base station 40 side receiving the radio waves from the positioning satellite 50, and thus the positioning unit 16 can measure the current position and the current azimuth of the work vehicle 1 from the positioning information and the correction information with high accuracy. The positioning information and the correction information are stored (retained) in the positioning unit 16.

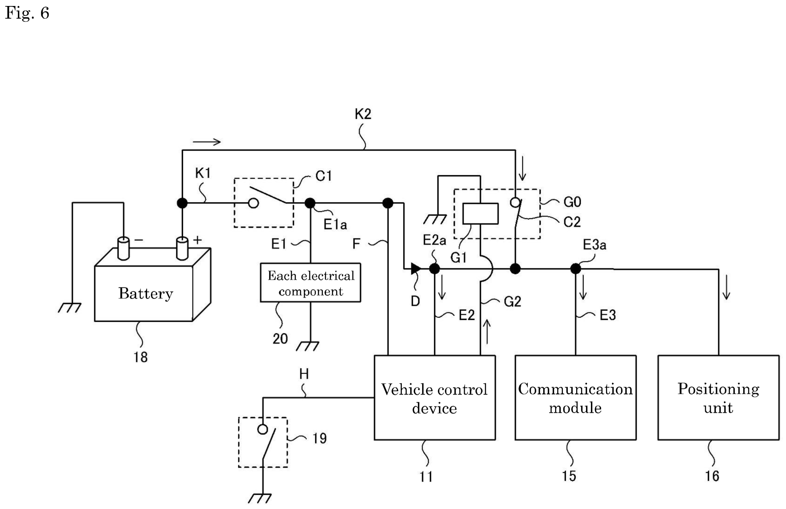

Here, for example, in a case where the operator suspends the automatic traveling of the work vehicle 1 due to a temporary break or the like, the operator switches the first switch C1 from an ON state to an OFF state. When the first switch C1 is in an OFF state, as shown in Fig. 6, a current flows to the positioning unit 16 from the battery 18 through the second current flow path K2 via the second switch C2 in an ON state. In this case, since a current can flow through each of the second branch path E2 and the third branch path E3, a current flows to the positioning unit 16 from the battery 18 through the second current flow path K2, the second branch path E2, and the third branch path E3, and currents also flow to the vehicle control device 11 and the communication module 15 from the battery 18.

As shown in Fig. 6, even when the first switch C1 is switched to an OFF state, since the second switch C2, which is a normally closed switch, is in an ON state, currents flow to the vehicle control device 11, the positioning unit 16, and the communication module 15 from the battery 18 through the second current flow path K2. As a result, since the supply of power is retained for the positioning unit 16 and the communication module 15, a state in which adjustment work such as adjusting the reception status of radio waves from the positioning satellite 50 has already been performed is retained. That is, the positioning unit 16 can retain a state in which the current position and the current azimuth of the work vehicle 1 are measured with high accuracy from the positioning information and the correction information.

Therefore, even if the work is suspended during the work and the first switch C1 is switched to an OFF state, as shown in Fig. 6, the currents flow from the battery 18 to the vehicle control device 11, the positioning unit 16, and the communication module 15 through the second current flow path K2, so that the positioning unit 16 can retain a state of measuring the current position and the current azimuth of the work vehicle 1 with high accuracy from the positioning information and the correction information. As a result, the automatic traveling of the work vehicle 1 can be resumed without performing the adjustment work again, and the work can be smoothly resumed. In a case where the automatic traveling of the work vehicle 1 is resumed, the operator switches the first switch C1 from an OFF state to an ON state.

The operator switches the first switch C1 to an OFF state not only when the work is temporarily suspended in the middle of the work but also when the work is ended. In this case, if the state in which the currents flow to the vehicle control device 11, the positioning unit 16, and the communication module 15 from the battery 18 through the second current flow path K2 is continued, the power of the battery 18 is wastefully consumed.

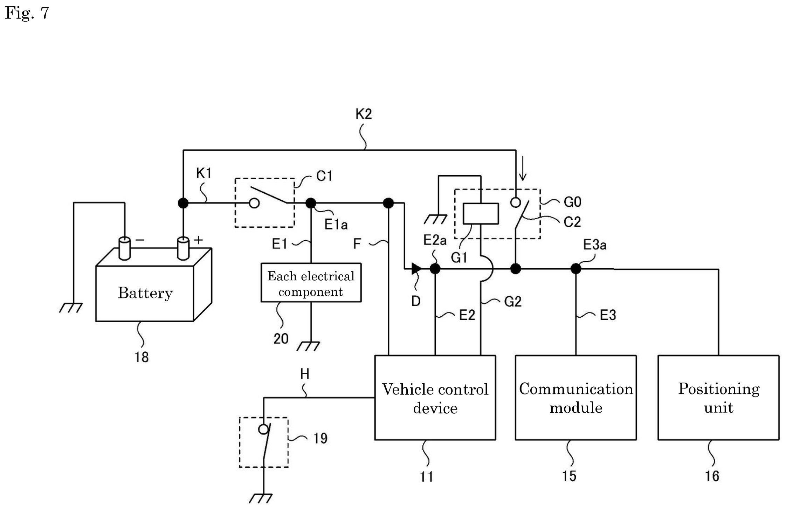

Therefore, in the present embodiment, the timer processing unit 113 starts measuring the time when the first switch C1 is switched to an OFF state. When a predetermined time (for example, two hours) has elapsed from the start of time measurement, the retention processing unit 114 switches the second switch C2 to an OFF state to stop the current flow from the battery 18 to the vehicle control device 11, the positioning unit 16, and the communication module 15 through the second current flow path K2, as shown in Fig. 7. The predetermined time may be set to, for example, a constant time such as two hours or may be changed.

As shown in Fig. 5, in a case where the first switch C1 is in an ON state, the retention processing unit receives the input of the ON signal through the ON signal input path F. Therefore, as shown in Fig. 6, the retention processing unit 114 can recognize a timing at which the input of the ON signal disappears as a timing at which the first switch C1 is switched from an ON state to an OFF state. As shown in Figs. 5 and 6, the retention processing unit 114 outputs the relay control output to the coil G1 through the relay control output path G2 by receiving the supply of power, and when the measurement time from after the first switch C1 is switched to an OFF state reaches a predetermined time (for example, two hours), the retention processing unit switches the second switch C2 to an OFF state by stopping the relay control output to the coil G1 as shown in Fig. 7.

When the first switch C1 is switched from an OFF state to an ON state, the timer processing unit 113 resets the measured time to 0. Therefore, for example, even in a case where the first switch C1 is switched from an OFF state to an ON state while the timer processing unit 113 measures the time after the first switch C1 is switched to an OFF state, the timer processing unit 113 resets the measured time to 0.

As shown in Fig. 7, in a case where both the first switch C1 and the second switch C2 are in an OFF state, the current flow from the battery 18 to the vehicle control device 11, the positioning unit 16, the communication module 15, and each electrical component 20 is stopped. As a result, in a case where the work is ended, the current flow to the positioning unit 16 and the like is stopped after a predetermined time elapses from switching of the first switch C1 to an OFF state, and the power of the battery 18 is not wastefully consumed, and the battery 18 can be prevented from being exhausted.

In a case where the work is ended, it may be desired to stop the current flow to the positioning unit 16 and the like without waiting for a predetermined time after the first switch C1 is switched to an OFF state. Therefore, as shown in Fig. 5, there is provided a power cutoff switch 19 for switching the second switch C2 to an OFF state even when a predetermined time does not elapse after the first switch C1 is switched to an OFF state.

The power cutoff switch 19 is configured as a normally open switch that is always in an OFF state, and is switched to an ON state through an operation of the operator or the like. The power cutoff switch 19 may be provided in, for example, a location that is disposed in a hood and is not exposed to the outside. As a result, the power cutoff switch 19 can be prevented from being erroneously operated, and the current flow to the positioning unit 16 and the like can be prevented from being stopped due to an erroneous operation or the like.

A cutoff switch ON signal indicating that the power cutoff switch 19 is in an ON state may be input to the vehicle control device 11 through a cutoff switch ON signal input path H. As shown in Fig. 7, when the power cutoff switch 19 is switched to an ON state, the cutoff switch ON signal is input to the vehicle control device 11 through the cutoff switch ON signal input path H. As a result, the retention processing unit 114 switches the second switch C2 to an OFF state by stopping the relay control output to the coil G1. As described above, when the power cutoff switch 19 is switched to an ON state through an operation of the operator or the like on the power cutoff switch 19, the relay control output from the retention processing unit 114 is stopped, the second switch C2 is switched to an OFF state, and the current flow from the battery 18 to the vehicle control device 11, the positioning unit 16, and the communication module 15 is stopped.

The operation on the power cutoff switch 19 is performed not only when the work is ended. For example, when a state in which the positioning unit 16 cannot accurately measure the current position and the current azimuth of the work vehicle 1 continues, there is a case where it is desired to measure the current position and the current azimuth of the work vehicle 1 by using the positioning unit 16 again. In such a case, by operating the power cutoff switch 19, the current flow from the battery 18 to the vehicle control device 11, the positioning unit 16, and the communication module 15 is temporarily stopped, and then the current position and the current azimuth of the work vehicle 1 can be measured again by the positioning unit 16.

As described above, in a case where the power supply retaining function is enabled, the supply of power from the battery 18 to the vehicle control device 11, the positioning unit 16, and the communication module 15 is retained until the elapsed time after the first switch C1 is switched to an OFF state exceeds a predetermined time (for example, two hours), and the supply of power from the battery 18 to the vehicle control device 11, the positioning unit 16, and the communication module 15 is stopped in a case where the elapsed time reaches the predetermined time. In a case where the power supply retaining function is disabled, the supply of power to each electrical component is stopped before the predetermined time elapses after the first switch C1 is switched to an OFF state (for example, immediately after the first switch C1 is switched to an OFF state).

Here, in a case where the above-described power supply retaining function is enabled, for example, when an ON operation and an OFF operation of the first switch C1 (key switch) are repeated, the supply of power for a predetermined time is started every time the first switch C1 is switched to an OFF state. Thus, the power of the battery 18 is wastefully consumed, and battery exhaustion is likely to occur. Therefore, the work vehicle 1 according to the present embodiment further includes a configuration that enables the power supply retaining function in a case where predetermined conditions are satisfied. Specifically, the retention processing unit 114 of the vehicle control device 11 enables the power supply retaining function when predetermined conditions for starting automatic traveling are satisfied in a case where the first switch C1 (key switch) is switched to an OFF state. In addition, in a case where the predetermined conditions are satisfied, the vehicle control device 11 stops the supply of power from the battery 18 to the vehicle control device 11, the positioning unit 16, and the communication module 15 when a predetermined time (for example, two hours) has elapsed from switching of the first switch C1 to an OFF state. Thus, in a case where the predetermined conditions are satisfied, the supply of power from the battery 18 to the vehicle control device 11, the positioning unit 16, and the communication module 15 is continued for a predetermined time after the first switch C1 is switched to an OFF state.

On the other hand, in a case where the first switch C1 is switched to an OFF state and the predetermined conditions are not satisfied, the retention processing unit 114 disables the power supply retaining function. As a result, in a case where the predetermined conditions are not satisfied, even if the first switch C1 is switched to an OFF state, the supply of power from the battery 18 to the vehicle control device 11, the positioning unit 16, and the communication module 15 is stopped at a timing at which the first switch C1 is switched to an OFF state or before the predetermined time elapses after the first switch C1 is switched to an OFF state. The predetermined conditions include a first condition (first example) related to positioning accuracy, a second condition (second example) related to a positioning azimuth of the work vehicle 1, and a third condition (third example) related to reading of the target route R. Hereinafter, first to third examples corresponding to the first to third conditions will be described.

### [First example]

In the first example, the retention processing unit 114 enables the power supply retaining function in a case where a positioning state of the work vehicle 1 has coincided with a positioning state in a positioning mode set by the operator during a period from switching of the first switch C1 to an ON state to switching of the first switch C1 to an OFF state (first condition), and disables the power supply retaining function in a case where the positioning state of the work vehicle 1 does not coincide with the positioning state in the positioning mode set by the operator during a period from switching of the first switch C1 to an ON state to switching of the first switch C1 to an OFF state.

For example, the operator selects a positioning mode on a setting screen D1 shown in Fig. 8. Examples of the positioning mode include a differential global navigation satellite system (DGNSS) mode, an RTK (work accuracy priority) mode, and an RTK (work continuation priority) mode. The operator can select any positioning mode on the setting screen D1.

When the operator selects the positioning mode, the positioning unit 16 receives radio waves transmitted from the positioning satellite 50 and starts positioning. Fig. 8 shows a state during positioning in the RTK mode (work accuracy priority).

The retention processing unit 114 determines whether or not the positioning state of the work vehicle 1 matches (FIX) the positioning state (high-accuracy positioning state) in the positioning mode (here, the RTK mode) set by the operator. In a case where the positioning state of the work vehicle 1 becomes the high-accuracy positioning state during a period from switching of the first switch C1 to an ON state to switching of the first switch C1 to an OFF state, the retention processing unit 114 enables the power supply retaining function in a case where the first switch C1 is switched to an OFF state thereafter. That is, the retention processing unit 114 continues the supply of power from the battery 18 to the vehicle control device 11, the positioning unit 16, and the communication module 15 for a predetermined time (for example, two hours) after the first switch C1 is switched to an OFF state.

As a result, when the positioning state temporarily becomes the positioning state in the positioning mode set by the operator, the power supply retaining function is enabled. Therefore, even when the first switch C1 is switched to an OFF state, the information regarding the target route R stored in the storage unit 115, for example, the respective pieces of information such as the positions of the reference points (the point A and the point B), the reference line L1, and the target route R are retained. Therefore, in a case where the first switch C1 is switched to an ON state again thereafter, it is possible to quickly start automatic traveling on the basis of the information.

Note that the retention processing unit 114 may enable the power supply retaining function in a case where the positioning state of the work vehicle 1 matches the positioning state in the positioning mode set by the operator at least once during a period from switching of the first switch C1 to an ON state to switching of the first switch C1 to an OFF state, or may enable the power supply retaining function in a case where the positioning state of the work vehicle 1 during a period from switching of the first switch C1 to an ON state to switching of the first switch C1 to an OFF state matches the positioning state in the positioning mode set by the operator and the matching state continues until the first switch C1 is switched to an OFF state.

On the other hand, when the positioning state of the work vehicle 1 has never been the high-accuracy positioning state during the period from switching of the first switch C1 to an ON state to switching of the first switch C1 to an OFF state, the retention processing unit 114 disables the power supply retaining function in a case where the first switch C1 is thereafter switched to an OFF state. That is, the retention processing unit 114 stops the supply of power from the battery 18 to the vehicle control device 11, the positioning unit 16, and the communication module 15 before the predetermined time (for example, two hours) elapses after the first switch C1 is switched to an OFF state. For example, the retention processing unit 114 stops the supply of power from the battery 18 to the vehicle control device 11, the positioning unit 16, and the communication module 15 at the timing at which the first switch C1 is switched to an OFF state. In this case, for example, the information regarding the automatic traveling stored in the storage unit 115 is erased.

### [Second example]

In the second example, the retention processing unit 114 enables the power supply retaining function in a case where an azimuth angle of an IMU (positioning device) has been initialized during a period from switching of the first switch C1 to an ON state to switching of the first switch C1 to an OFF state, and disables the power supply retaining function in a case where the azimuth angle of the IMU has not been initialized during the period from switching of the first switch C1 to an ON state to switching of the first switch C1 to an OFF state. The initialization of the azimuth angle is initialization (azimuth recognition process) after the engine is started and is included in start conditions for the automatic traveling.

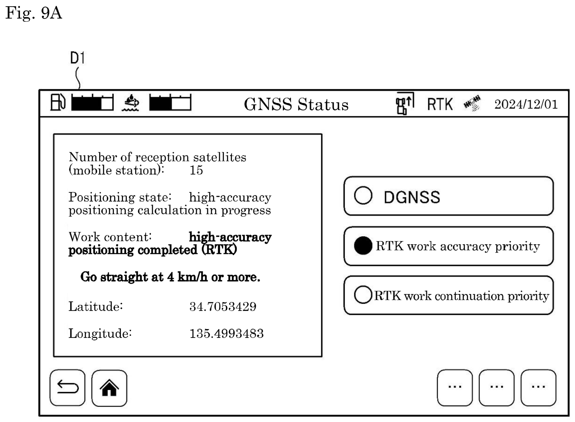

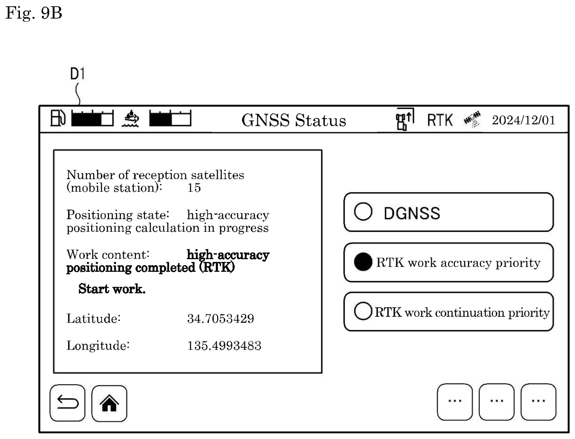

Fig. 9A shows the setting screen D1 before the initialization of the azimuth angle of the IMU is completed, and Fig. 9B shows the setting screen D1 in a case where the initialization of the IMU has been completed. The positioning unit 16 recognizes the azimuth in a state in which the work vehicle 1 is traveling at a predetermined vehicle speed or more. When the initialization of the azimuth angle has been completed, the start of the automatic traveling is permitted. The retention processing unit 114 determines whether or not the initialization of the azimuth angle of the IMU has been completed.

In a case where the initialization of the azimuth angle of the IMU has been completed during a period from switching of the first switch C1 to an ON state to switching of the first switch C1 to an OFF state, the retention processing unit 114 enables the power supply retaining function in a case where the first switch C1 is switched to an OFF state thereafter. That is, the retention processing unit 114 continues the supply of power from the battery 18 to the vehicle control device 11, the positioning unit 16, and the communication module 15 for a predetermined time (for example, two hours) after the first switch C1 is switched to an OFF state.

As a result, the power supply retaining function is enabled in a case where the initialization of the azimuth angle of the IMU has been completed once. Therefore, even in a case where the first switch C1 is switched to an OFF state, each piece of the information regarding the target route R stored in the storage unit 115 is retained. Therefore, in a case where the first switch C1 is switched to an ON state again thereafter, it is possible to quickly start automatic traveling on the basis of the information.

Note that the retention processing unit 114 may enable the power supply retaining function in a case where the initialization of the azimuth angle of the IMU has been completed at least once during a period from switching of the first switch C1 to an ON state to switching of the first switch C1 to an OFF state, or may enable the power supply retaining function in a case where the initialization of the azimuth angle of the IMU has been completed during a period from switching of the first switch C1 to an ON state to switching of the first switch C1 to an OFF state and the initialization completion state continues until the first switch C1 is switched to an OFF state.

On the other hand, in a case where the initialization of the azimuth angle of the IMU has never been completed during the period from switching of the first switch C1 to an ON state to switching of the first switch C1 to an OFF state, the retention processing unit 114 disables the power supply retaining function in a case where the first switch C1 is switched to an OFF state thereafter. That is, the retention processing unit 114 stops the supply of power from the battery 18 to the vehicle control device 11, the positioning unit 16, and the communication module 15 before the predetermined time (for example, two hours) elapses after the first switch C1 is switched to an OFF state (or at a timing at which the first switch C1 is switched to an OFF state).

### [Third example]

In the third example, the retention processing unit 114 enables the power supply retaining function in a case where the route information (the reference line L1, the target route R, and the like) for automatic traveling registered in advance has been read by the work vehicle 1 during a period from switching of the first switch C1 to an ON state to switching of the first switch C1 to an OFF state, and disables the power supply retaining function in a case where the route information has not been read by the work vehicle 1 during the period from switching of the first switch C1 to an ON state to switching of the first switch C1 to an OFF state.

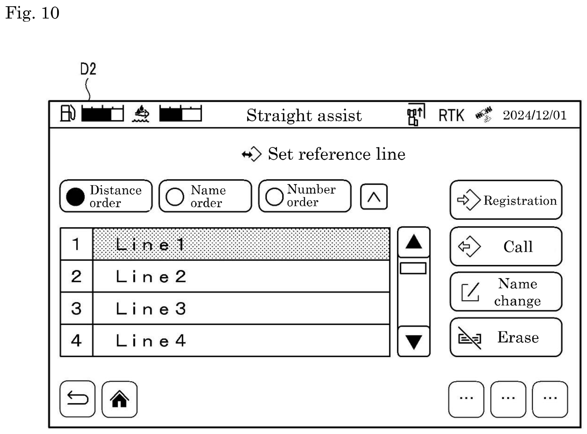

The retention processing unit 114 determines whether or not the route information has been read by the work vehicle 1. For example, when the operator selects the reference line L1 on a setting screen D2 (see Fig. 10) displayed on the operation device 17, the vehicle control device 11 reads the selected reference line L1. In a case where the route information has been read during a period from switching of the first switch C1 to an ON state to switching of the first switch C1 to an OFF state, the retention processing unit 114 enables the power supply retaining function in a case where the first switch C1 is switched to an OFF state thereafter. That is, the retention processing unit 114 continues the supply of power from the battery 18 to the vehicle control device 11, the positioning unit 16, and the communication module 15 for a predetermined time (for example, two hours) after the first switch C1 is switched to an OFF state.

As a result, the power supply retaining function is enabled in a case where the route information has been read once by the work vehicle 1. Therefore, even when the first switch C1 is switched to an OFF state, the information regarding the target route R stored in the storage unit 115 is retained. Therefore, in a case where the first switch C1 is switched to an ON state again thereafter, the automatic traveling can be started quickly on the basis of the information. In addition, since the supply of power to the positioning unit 16 continues, positioning preparation can be performed even when the first switch C1 is switched to an OFF state.

Note that the retention processing unit 114 may enable the power supply retaining function in a case where the route information has been read at least once during a period from switching of the first switch C1 to an ON state to switching of the first switch C1 to an OFF state, or may enable the power supply retaining function in a case where the route information has been read during the period from switching of the first switch C1 to an ON state to switching of the first switch C1 to an OFF state and the read state continues until the first switch C1 is switched to an OFF state.

On the other hand, in a case where the route information has never been read by the work vehicle 1 until the first switch C1 is switched to an OFF state after being switched to an ON state, the retention processing unit 114 disables the power supply retaining function in a case where the first switch C1 is switched to an OFF state thereafter. That is, the retention processing unit 114 stops the supply of power from the battery 18 to the vehicle control device 11, the positioning unit 16, and the communication module 15 before the predetermined time (for example, two hours) elapses after the first switch C1 is switched to an OFF state (or at a timing at which the first switch C1 is switched to an OFF state).

As described above, in a case where the first switch C1 is switched to an OFF state, the retention processing unit 114 enables the power supply retaining function when any of the first to third conditions for starting automatic traveling is satisfied, and disables the power supply retaining function when none of the first to third conditions is satisfied. In addition, for example, in a case where the first switch C1 is switched to an OFF state, the retention processing unit 114 continues the supply of power to the storage unit 115 when any of the first to third conditions is satisfied, and stops the supply of power to the storage unit 115 when none of the first to third conditions is satisfied. As described above, in a case where the processing for starting the automatic traveling is executed before the first switch C1 is switched to an OFF state, the information regarding the automatic traveling can be retained by enabling the power supply retaining function.

Note that the retention processing unit 114 may switch enablement and disablement of the power supply retaining function by combining the first to third conditions. For example, the retention processing unit 114 may enable the power supply retaining function in a case where at least one of the first to third conditions is satisfied. The operator may select a condition for enabling the power supply retaining function from the first to third conditions.

Here, for example, in a case where an input voltage of the vehicle control device 11 decreases due to a decrease in the performance of the battery 18 or a decrease in the amount of charge, the battery exhaustion is likely to occur by enabling the power supply retaining function. Therefore, even in a case where the predetermined conditions are satisfied, the retention processing unit 114 disables the power supply retaining function when the input voltage of the vehicle control device 11 is equal to or less than a threshold. For example, in a case where the input voltage is equal to or less than the threshold before a predetermined time elapses after the first switch C1 is switched to an OFF state, the retention processing unit 114 disables the power supply retaining function at that time and stops the supply of power from the battery 18 to the vehicle control device 11, the positioning unit 16, and the communication module 15.

As still another embodiment, in a case where the input voltage is equal to or less than the threshold while the first switch C1 is in an ON state, the retention processing unit 114 may not enable the power supply retaining function even if the predetermined conditions are satisfied, and may stop the supply of power from the battery 18 to the vehicle control device 11, the positioning unit 16, and the communication module 15 at the timing at which the first switch C1 is switched to an OFF state.

### [Power supply control process]

Hereinafter, an example of a procedure of the power supply control process executed by the work vehicle 1 will be described with reference to Fig. 11.

The present invention can be regarded as an invention of a power supply control method for executing one or a plurality of steps included in the power supply control process. In addition, one or a plurality of steps included in the power supply control process described here may be omitted as appropriate. Note that the execution order of each step in the power supply control process may be different within a range in which similar functions and effects are produced. Here, a case where the vehicle control device 11 executes each step in the power supply control process will be described as an example, but a power supply control method in which one or a plurality of processors execute each step in the power supply control process in a distributed manner is also considered as another embodiment.

### <Step S1>

In step S1, the vehicle control device 11 determines whether or not the key switch (first switch C1) for starting the engine 131 (see Fig. 2) is in an ON state. Specifically, upon receiving an operation (ON operation) of switching the first switch C1 to an ON state from the operator, the vehicle control device 11 determines that the first switch C1 is in an ON state. Upon receiving the ON operation of the first switch C1 (S1: Yes), the vehicle control device 11 causes the process to proceed to step S2. The vehicle control device 11 continues the determination process in step S1 until receiving the ON operation of the first switch C1 (S1: No).

### <Step S2>

In step S2, the vehicle control device 11 supplies power to each electrical component. Specifically, the vehicle control device 11 causes the battery 18 to supply power to the electrical components 20 in addition to the vehicle control device 11, the communication module 15, and the positioning unit 16. For example, in the circuit diagram shown in Fig. 5, upon receiving the ON operation of the first switch C1 (S1: Yes), the vehicle control device 11 switches the first switch C1 to an ON state such that power is supplied from the battery 18 to the vehicle control device 11, the communication module 15, the positioning unit 16, and each electrical component 20 through the first current flow path K1 and the second current flow path K2.

<Step S3>

In step S3, the vehicle control device 11 determines whether or not the first switch C1 is in an OFF state. Specifically, upon receiving an operation (OFF operation) of switching the first switch C1 to an OFF state from the operator, the vehicle control device 11 determines that the first switch C1 is in an OFF state. Upon receiving the OFF operation of the first switch C1 (S3: Yes), the vehicle control device 11 causes the process to proceed to step S4. When not receiving the OFF operation of the first switch C1 (S3: No), the vehicle control device 11 returns the processing to step S2 and continues the supply of power to the vehicle control device 11, the communication module 15, the positioning unit 16, and each electrical component 20.

### <Step S4>

In step S4, the vehicle control device 11 determines whether or not predetermined conditions are satisfied. The predetermined conditions are conditions related to automatic traveling (conditions for starting automatic traveling), and include, for example, that a positioning state of the work vehicle 1 has coincided with a positioning state in a positioning mode set by the operator during a period from switching of the first switch C1 to an ON state to switching of the first switch C1 to an OFF state (first condition), that an azimuth angle of the IMU has been initialized during a period from switching of the first switch C1 to an ON state to switching of the first switch C1 to an OFF state (second condition), that route information (the reference line L1, the target route R, and the like) has been read during a period from switching of the first switch C1 to an ON state to switching of the first switch C1 to an OFF state (third condition), and the like.

Under the first condition, in a case where the positioning state of the work vehicle 1 has coincided with the positioning state (see Fig. 8) in the positioning mode set by the operator during a period from switching of the first switch C1 to an ON state to switching of the first switch C1 to an OFF state (in a case where the first condition is satisfied) (S4: Yes), the vehicle control device 11 causes the process to proceed to step S5. On the other hand, when the positioning state of the work vehicle 1 has not coincided with the positioning state in the positioning mode set by the operator during the period from switching of the first switch C1 to an ON state to switching of the first switch C1 to an OFF state (in a case where the first condition is not satisfied) (S4: No), the vehicle control device 11 causes the process to proceed to step S7.

Under the second condition, in a case where the azimuth angle of the IMU has been initialized during a period from switching of the first switch C1 to an ON state to switching of the first switch C1 to an OFF state (in a case where the second condition is satisfied) (S4: Yes), the vehicle control device 11 causes the process to proceed to step S5. On the other hand, in a case where the azimuth angle of the IMU has not been initialized during the period from switching of the first switch C1 to an ON state to switching of the first switch C1 to an OFF state (in a case where the second condition is not satisfied) (S4: No), the vehicle control device 11 causes the process to proceed to step S7.

Under the third condition, in a case where the route information (the reference line L1, the target route R, and the like) has been read by the work vehicle 1 during a period from switching of the first switch C1 to an ON state to switching of the first switch C1 to an OFF state (in a case where the third condition is satisfied) (S4: Yes), the vehicle control device 11 causes the process to proceed to step S5. On the other hand, in a case where the route information has not been read by the work vehicle 1 during the period from switching of the first switch C1 to an ON state to switching of the first switch C1 to an OFF state (in a case where the third condition is not satisfied) (S4: No), the vehicle control device 11 causes the process to proceed to step S7.

### <Step S5>

In step S5, the vehicle control device 11 determines whether or not a predetermined time has elapsed. Specifically, the vehicle control device 11 determines whether or not an elapsed time (measurement time) from switching of the first switch C1 to an OFF state reaches a predetermined time. In a case where the predetermined time has elapsed from switching of the first switch C1 to an OFF state (S5: Yes), the vehicle control device 11 causes the process to proceed to step S7. On the other hand, in a case where the predetermined time has not elapsed from switching of the first switch C1 to an OFF state (S5: No), the vehicle control device 11 causes the process to proceed to step S6.

### <Step S6>

In step S6, the vehicle control device 11 determines whether or not an input voltage to the vehicle control device 11 is equal to or less than a threshold. In a case where the input voltage is equal to or less than the threshold (S6: Yes), the vehicle control device 11 causes the process to proceed to step S7. On the other hand, in a case where the input voltage is not equal to or less than the threshold (S6: No), the vehicle control device 11 causes the process to proceed to step S5.

As described above, the vehicle control device 11 causes the process to proceed to step S7 in a case where the input voltage is equal to or less than the threshold before the predetermined time elapses from switching of the first switch C1 to an OFF state (S6: Yes), and causes the process to proceed to step S7 in a case where the predetermined time has elapsed in a state in which the input voltage has exceeded the threshold from switching of the first switch C1 to an OFF state (S5: Yes).

### <Step S7>

In step S7, the vehicle control device 11 stops the supply of power from the battery 18 to the vehicle control device 11, the communication module 15, the positioning unit 16, and the electrical components 20.

As described above, in a case where the first switch C1 is in an OFF state and the predetermined conditions are satisfied, the vehicle control device 11 enables the power supply retaining function for a predetermined time to continue the supply of power to each electrical component, and in a case where the first switch C1 is in an OFF state and the predetermined conditions are not satisfied, the vehicle control device 11 disables the power supply retaining function to stop the supply of power to each electrical component. In addition, the vehicle control device 11 disables the power supply retaining function in a case where the input voltage is equal to or less than the threshold. The vehicle control device 11 executes the power supply retaining process as described above.

As described above, the work vehicle 1 according to the present embodiment stores information regarding automatic traveling in the storage unit 115 of the vehicle control device 11 by using power supplied from the battery 18 in a case where the key switch (first switch C1) for the engine 131 of the work vehicle 1 is in an ON state, enables the power supply retaining function in a case where the predetermined conditions for starting automatic traveling are satisfied when the first switch C1 is in an OFF state, and disables the power supply retaining function in a case where the predetermined conditions are not satisfied. Specifically, the vehicle control device 11 continues the supply of power to the storage unit 115 in a case where the predetermined conditions are satisfied, and stops the supply of power to the storage unit 115 in a case where the predetermined conditions are not satisfied. The vehicle control device 11 continues the supply of power for a predetermined time in a case where the predetermined conditions are satisfied, and stops the supply of power before the predetermined time elapses in a case where the predetermined conditions are not satisfied.

According to the above configuration, since the power supply is retained (the supply of power is retained) even in a case where the first switch C1 is in an OFF state, it is possible to retain information regarding automatic traveling even in a case where the first switch C1 is temporarily switched to an OFF state. In addition, in a case where the first switch C1 is switched to an OFF state, the power supply is retained (the supply of power is continued) only when predetermined conditions are satisfied, and the supply of power is stopped when the predetermined conditions are not satisfied. Therefore, it is possible to prevent the supply of power from being continued by repeating the ON/OFF operation, and it is possible to prevent wasteful power consumption and battery exhaustion.

### [Other embodiments]

As another embodiment of the present invention, when the key switch (first switch C1) is switched to an OFF state and the predetermined conditions (first to third conditions) are satisfied in a state in which the information regarding the automatic traveling is stored in the storage unit 115, the vehicle control device 11 may enable the power supply retaining function, continue the supply of power to the storage unit 115, and cause the storage unit 115 to retain the information regarding the automatic traveling. On the other hand, in a case where the first switch C1 is switched to an OFF state in a state in which the information regarding the automatic traveling is not stored in the storage unit 115, the vehicle control device 11 may disable the power supply retaining function and stop the supply of power to the storage unit 115 even when the predetermined conditions (first to third conditions) are satisfied. That is, the vehicle control device 11 may stop the supply of power to the storage unit 115 before a predetermined time elapses in a case where the first switch C1 is switched to an OFF state in a state in which the information regarding the automatic traveling is not stored in the storage unit 115.

In the above-described embodiment, the predetermined time is set to a certain time (for example, two hours) in advance. As still another embodiment, the vehicle control device 11 may set the predetermined time according to the predetermined conditions. For example, the vehicle control device 11 sets the predetermined time to a first time T1 in the case of the first condition, sets the predetermined time to a second time T2 in the case of the second condition, and sets the predetermined time to a third time T3 in the case of the third condition. In addition, the vehicle control device 11 sets the first time T1, the second time T2, and the third time T3 to different times. For example, the vehicle control device 11 may set a condition included in the automatic traveling start conditions to a long time, and may set a condition not included in the automatic traveling start conditions to a short time.

As still another embodiment, the predetermined time may be settable by an operator. For example, the operator may be able to set the predetermined time on a setting screen in advance. The operator may individually set the predetermined time in each of the first to third conditions.

As still another embodiment, the vehicle control device 11 may set the predetermined time according to a state of the work vehicle 1 when the key switch (first switch C1) is switched to an OFF state. For example, in a case where the key switch is switched to an OFF state while the work vehicle 1 is performing work, there is a high possibility that the automatic traveling is resumed. Therefore, the vehicle control device 11 sets the predetermined time to a long time such that the information regarding the automatic traveling can be retained for a long time. On the other hand, in a case where the key switch is switched to an OFF state when the work vehicle 1 is not performing work, the vehicle control device 11 sets the predetermined time to a short time to suppress power consumption.

For example, the vehicle control device 11 may set the predetermined time according to a remaining battery amount. For example, the vehicle control device 11 sets the predetermined time to a long time in a case where the remaining battery amount is large, and sets the predetermined time to a short time in a case where the remaining battery amount is small.

As still another embodiment, the vehicle control device 11 may enable the power supply retaining function in a case where the key switch is switched to an OFF state while the work vehicle 1 is performing work, and disable the power supply retaining function in a case where the key switch is switched to an OFF state after the work vehicle 1 ends the work.

In addition, as still another embodiment, the vehicle control device 11 may inquire of the operator whether to retain the power supply (selection operation of "retain" or "not retain") in a case where the key switch is switched to an OFF state. The vehicle control device 11 enables the power supply retaining function in a case where the operator selects "retain" in response to the inquiry, and disables the power supply retaining function in a case where the operator selects "not retain" in response to the inquiry.

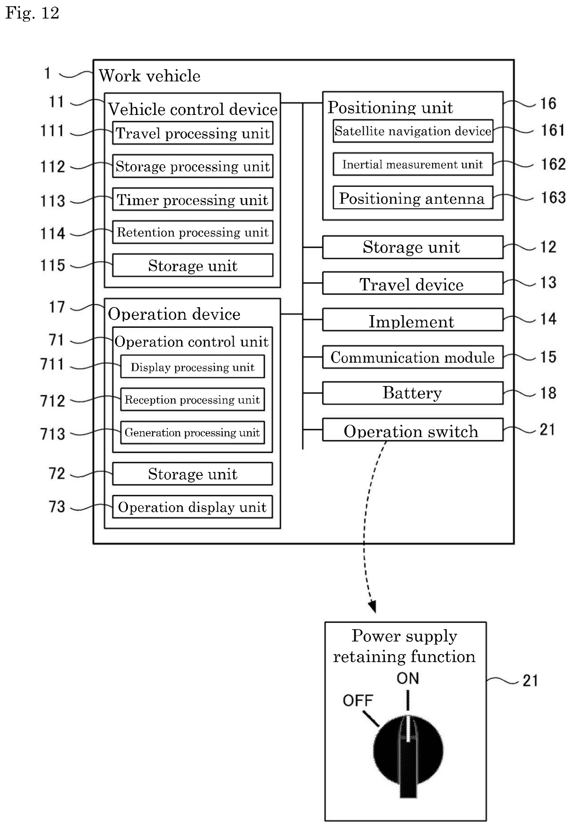

As still another embodiment, the work vehicle 1 may include an operation switch 21 that receives an operation of enabling or disabling the power supply retaining function. Fig. 12 shows a specific example of the operation switch 21. For example, the operation switch 21 is installed near the steering wheel 137 in the driver's seat 138. The operation switch 21 may be included in the operation device 17, or may be an image object displayed on the operation screen of the operation device 17 and receiving a touch operation.

When the operator sets the operation switch 21 to "ON", the vehicle control device 11 enables the power supply retaining function when the predetermined conditions for starting automatic traveling are satisfied in a case where the first switch C1 (key switch) is switched to an OFF state.

On the other hand, when the operator sets the operation switch 21 to "OFF", the vehicle control device 11 forcibly disables the power supply retaining function. That is, in a case where the operation switch 21 is set to "OFF", even when the first switch C1 is in an OFF state and the predetermined conditions are satisfied, the vehicle control device 11 stops the supply of power from the battery 18 at a timing at which the first switch C1 is switched to an OFF state or before the predetermined time elapses from switching of the first switch C1 to an OFF state. For example, the operator sets the operation switch 21 to "OFF" to disable the power supply retaining function when the work vehicle 1 is used for a purpose not using automatic traveling (for example, during manual traveling).

As still another embodiment, the vehicle control device 11 may enable the power supply retaining function when the operator sets the operation switch 21 to "ON", and disable the power supply retaining function when the operator sets the operation switch 21 to "OFF". That is, upon receiving the operation of enabling the power supply retaining function, the vehicle control device 11 forcibly enables the power supply retaining function regardless of whether or not the predetermined conditions are satisfied. Upon receiving the operation of disabling the power supply retaining function, the vehicle control device 11 forcibly disables the power supply retaining function regardless of whether or not the predetermined conditions are satisfied. Specifically, the vehicle control device 11 continues, upon receiving the operation of enabling the power supply retaining function, the supply of power from the battery 18 in a case where the first switch C1 is switched to an OFF state, and stops, upon receiving the operation of disabling the power supply retaining function, the supply of power from the battery 18 in a case where the first switch C1 is switched to an OFF state.

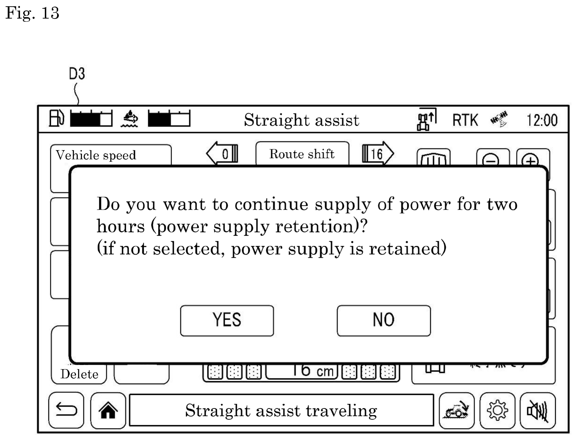

As still another embodiment, the operation device 17 may inquire whether or not to continue the supply of power from the battery 18 for a predetermined time when the first switch C1 is switched to an OFF state in a case where the power supply retaining function is set to be enabled. For example, as shown in Fig. 13, the operation device 17 displays a message for inquiring whether to continue the supply of power from the battery 18 for two hours on a travel screen D3 displaying an automatic traveling state. In a case where the operator presses the "YES" button in response to the message, the vehicle control device 11 continues the supply of power from the battery 18 for two hours. In a case where the operator presses the "NO" button in response to the message, the vehicle control device 11 stops the supply of power from the battery 18 at that time. In a case where the operator does not respond to the message within a predetermined time, the vehicle control device 11 may continue the supply of power from the battery 18 for two hours.

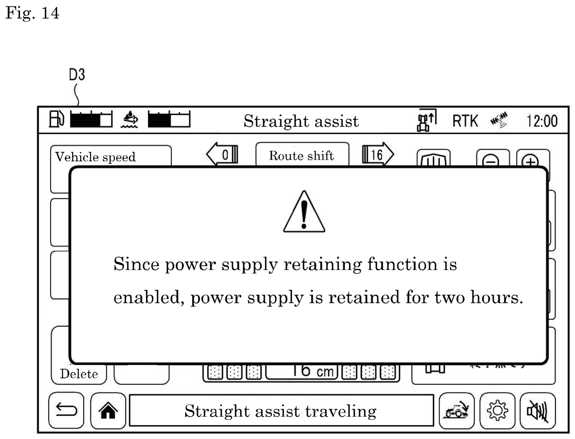

As still another embodiment, the operation device 17 may execute a process of providing a notification of predetermined information (notification process) in a case where the power supply retaining function is enabled. As a specific example of the notification process, the operation device 17 may provide a notification of information indicating that the power supply retaining function is enabled by using vocal sound (vocal sound announcement, buzzer sound, etc.), may display the information on a display screen (see the travel screen D3 shown in Fig. 14), or may turn on or blink an indicator lamp provided in the work vehicle 1. The operation device 17 may execute the notification process when the first switch C1 is switched to an OFF state in a case where the power supply retaining function is enabled.

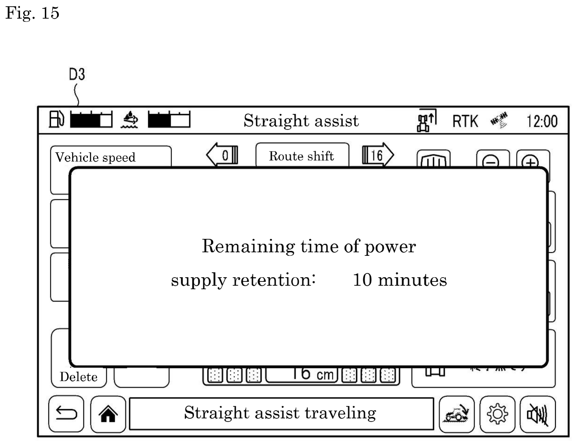

As still another embodiment, the operation device 17 may display, on the display screen, the remaining time (remaining time of power supply retention) of the time (for example, two hours) for which the power supply is continued after the first switch C1 is switched to an OFF state. For example, as shown in Fig. 15, the operation device 17 displays the remaining time in a countdown form on the travel screen D3. The operation device 17 may provide a notification of the remaining time by using vocal sound, or may turn on or blink the indicator lamp according to the remaining time. For example, the operation device 17 may turn on the indicator lamp when the remaining time is long, and may blink the indicator lamp when the remaining time is short. The operation device 17 may shorten the blinking cycle as the remaining time becomes shorter. The operation device 17 may shorten a cycle of the buzzer sound or increase the volume of the buzzer sound as the remaining time becomes shorter. As a result, the operator can easily ascertain the remaining time. In addition, by ascertaining the remaining time, the operator can easily take measures such as extending the time for which the supply of power is continued (power supply retention time).

In the above-described embodiment, the configuration is exemplified in which the supply of power to the storage unit 115 storing the information regarding the automatic traveling is continued (power supply retention) or stopped. However, the "information regarding automatic traveling" may be positioning information (for example, a positioning mode) stored in the positioning unit 16, or may be communication information (for example, correction information) stored in the communication module 15. That is, the "information regarding automatic traveling" of the present invention includes route information, positioning information, and communication information. In addition, the "storage unit that stores (retains) information regarding automatic traveling" may be included in the positioning unit 16 or may be included in the communication module 15. The "storage unit that stores (retains) information regarding automatic traveling" may be the storage unit 12 (see Fig. 1) that stores a control program such as a power supply control program and an automatic traveling program.

As still another embodiment, the work vehicle 1 may be configured to cause the positioning unit 16 to store (retain) the positioning information (including the correction information) by using the power supplied from the battery 18 in a case where the first switch C1 is in an ON state, continue the supply of power to the positioning unit 16 when predetermined conditions for starting automatic traveling are satisfied (enable the power supply retaining function) in a case where the first switch C1 is in an OFF state, and stop the supply of power to the positioning unit 16 when the predetermined conditions are not satisfied (disable the power supply retaining function).

Note that the vehicle control device 11 is an example of a power supply control system of the present invention. The power supply control system of the present invention may include the vehicle control device 11 and the positioning unit 16, may include the vehicle control device 11, the positioning unit 16, and the communication module 15, or may include the battery 18, the vehicle control device 11, the positioning unit 16, and the communication module 15. The power supply control system of the present invention may include the vehicle control device 11 and the operation device 17. The power supply control system may include a storage processing unit 112, a timer processing unit 113, and a retention processing unit 114.

The vehicle control device 11 may execute at least one of a process of causing the storage unit 115 of the vehicle control device 11 to store the information regarding the automatic traveling and a process of causing the positioning unit 16 to store (retain) the positioning information by using the power supplied from the battery 18 in a case where the key switch (first switch C1) of the work vehicle 1 is in an ON state. In a case where the key switch is switched to an OFF state, the vehicle control device 11 may continue the supply of power to at least one of the storage unit 115 and the positioning unit 16 when the predetermined conditions for starting automatic traveling are satisfied, and stop the supply of power to at least one of the storage unit 115 and the positioning unit 16 when the predetermined conditions are not satisfied.

### [Additional note of invention]

Hereinafter, an outline of the invention extracted from the embodiment will be additionally described. Note that configurations and processing functions described in the following additional notes can be selected and freely combined.
<Additional Note 1> A power supply control method including:
   storing information regarding automatic traveling in a storage unit by using power supplied from a battery in a case where a switch of a work vehicle is in an ON state; and
   continuing supply of the power to the storage unit when predetermined conditions for starting automatic traveling are satisfied and stopping the supply of the power to the storage unit when the predetermined conditions are not satisfied, in a case where the switch is switched to an OFF state.
<Additional Note 2> The power supply control method according to Additional Note 1, in which
   the supply of the power to the storage unit is continued such that the information regarding the automatic traveling is retained in the storage unit in a case where the switch is switched to the OFF state and the predetermined conditions are satisfied in a state in which the information regarding the automatic traveling is stored in the storage unit.
<Additional Note 3> The power supply control method according to Additional Note 1 or 2, in which
   the supply of the power to the storage unit is continued for a predetermined time in a case where the predetermined conditions are satisfied, and
   the supply of the power to the storage unit is stopped before the predetermined time elapses in a case where the predetermined conditions are not satisfied.
<Additional Note 4> The power supply control method according to Additional Note 3, in which
   the supply of the power to the storage unit is stopped before the predetermined time elapses in a case where the switch is switched to the OFF state in a state in which the information regarding the automatic traveling is not stored in the storage unit.
<Additional Note 5> The power supply control method according to any one of Additional Notes 1 to 4, in which
   the supply of the power to the storage unit is continued in a case where a positioning state of the work vehicle has coincided with a positioning state in a positioning mode set by a user during a period from switching of the switch to the ON state to switching of the switch to the OFF state, and
   the supply of the power to the storage unit is stopped in a case where the positioning state of the work vehicle has not coincided with the positioning state in the positioning mode set by the user during the period from the switching of the switch to the ON state to the switching of the switch to the OFF state.
<Additional Note 6> The power supply control method according to any one of Additional Notes 1 to 5, in which
   the supply of the power to the storage unit is continued in a case where an azimuth angle of a positioning device has been initialized during a period from switching of the switch to the ON state to switching of the switch to the OFF state, and
   the supply of the power to the storage unit is stopped in a case where the azimuth angle of the positioning device has not been initialized during the period from the switching of the switch to the ON state to the switching of the switch to the OFF state.
<Additional Note 7> The power supply control method according to any one of Additional Notes 1 to 6, in which
   the supply of the power to the storage unit is continued in a case where route information for automatic traveling registered in advance has been read by the work vehicle during a period from switching of the switch to the ON state to switching of the switch to the OFF state, and
   the supply of the power to the storage unit is stopped in a case where the route information has not been read by the work vehicle during the period from the switching of the switch to the ON state to the switching of the switch to the OFF state.
<Additional Note 8> The power supply control method according to Additional Note 3, in which
   the supply of the power to the storage unit is stopped before the predetermined time elapses in a case where the power for the storage unit is equal to or less than a threshold even when the predetermined conditions are satisfied.
<Additional Note 9> The power supply control method according to Additional Note 3, in which
   in a case where the predetermined conditions are satisfied, the supply of the power to the storage unit is stopped when the predetermined time elapses after the switch is switched to the OFF state.

<Additional Note 10> The power supply control method according to Additional Note 3, in which
   the predetermined time is set according to the predetermined conditions.
<Additional Note 11> The power supply control method according to Additional Note 3, in which
   the predetermined time is set according to a state of the work vehicle when the switch is switched to the OFF state.
<Additional Note 12> A power supply control method including:
   storing positioning information in a positioning device by using power supplied from a battery in a case where a switch of a work vehicle is in an ON state; and
   continuing supply of the power to the positioning device when predetermined conditions for starting automatic traveling are satisfied and stopping the supply of the power to the positioning device when the predetermined conditions are not satisfied, in a case where the switch is switched to an OFF state.
<Additional Note 13> A power supply control method including:
   storing information regarding automatic traveling in a storage unit by using power supplied from a battery in a case where a switch of a work vehicle is in an ON state;
   receiving an operation of enabling or disabling a function of continuing supply of the power to the storage unit in a case where the switch is switched to an OFF state; and
   continuing the supply of the power to the storage unit when the switch is switched to the OFF state in a case where the operation of enabling the function is received, and stopping the supply of the power to the storage unit when the switch is switched to the OFF state in a case where the operation of disabling the function is received.
<Additional Note 14> A power supply control program for causing one or a plurality of processors to execute:
   storing information regarding automatic traveling in a storage unit by using power supplied from a battery in a case where a switch of a work vehicle is in an ON state; and
   continuing supply of the power to the storage unit when predetermined conditions for starting automatic traveling are satisfied and stopping the supply of the power to the storage unit when the predetermined conditions are not satisfied, in a case where the switch is switched to an OFF state.
<Additional Note 15> A power supply control system including:
   a storage processing unit that stores information regarding automatic traveling in a storage unit by using power supplied from a battery in a case where a switch of a work vehicle is in an ON state; and
   a retention processing unit that continues supply of the power to the storage unit when predetermined conditions for starting automatic traveling are satisfied and stops the supply of the power to the storage unit when the predetermined conditions are not satisfied, in a case where the switch is switched to an OFF state.

### LIST OF REFERENCE SIGNS

- 1: Work vehicle
- 11: Vehicle control device
- 12: Storage unit
- 13: Travel device
- 14: Implement
- 15: Communication module
- 16: Positioning unit (positioning device)
- 17: Operation device
- 18: Battery
- 19: Power cutoff switch
- 20: Electrical component
- 21: Operation switch
- 40: Base station
- 50: Positioning satellite
- 71: Operation control unit
- 72: Storage unit
- 73: Operation display unit
- 111: Travel processing unit
- 112: Storage processing unit
- 113: Timer processing unit
- 114: Retention processing unit
- 115: Storage unit
- 161: Satellite navigation device
- 162: Inertial measurement unit
- 163: Positioning antenna
- C1: First switch
- C2: Second switch
- D1: Setting screen
- D2: Setting screen
- F1: Field
- L1: Reference line
- R: Target route

## Claims

1. A power supply control method comprising:
storing information regarding automatic traveling in a storage unit by using power supplied from a battery in a case where a switch of a work vehicle is in an ON state; and
continuing supply of the power to the storage unit when predetermined conditions for starting automatic traveling are satisfied and stopping the supply of the power to the storage unit when the predetermined conditions are not satisfied, in a case where the switch is switched to an OFF state.

2. The power supply control method according to claim 1, wherein
the supply of the power to the storage unit is continued such that the information regarding the automatic traveling is retained in the storage unit in a case where the switch is switched to the OFF state and the predetermined conditions are satisfied in a state in which the information regarding the automatic traveling is stored in the storage unit.

3. The power supply control method according to claim 1, wherein
the supply of the power to the storage unit is continued for a predetermined time in a case where the predetermined conditions are satisfied, and
the supply of the power to the storage unit is stopped before the predetermined time elapses in a case where the predetermined conditions are not satisfied.

4. The power supply control method according to claim 3, wherein
the supply of the power to the storage unit is stopped before the predetermined time elapses in a case where the switch is switched to the OFF state in a state in which the information regarding the automatic traveling is not stored in the storage unit.

5. The power supply control method according to claim 1, wherein
the supply of the power to the storage unit is continued in a case where a positioning state of the work vehicle has coincided with a positioning state in a positioning mode set by a user during a period from switching of the switch to the ON state to switching of the switch to the OFF state, and
the supply of the power to the storage unit is stopped in a case where the positioning state of the work vehicle has not coincided with the positioning state in the positioning mode set by the user during the period from the switching of the switch to the ON state to the switching of the switch to the OFF state.

6. The power supply control method according to claim 1, wherein
the supply of the power to the storage unit is continued in a case where an azimuth angle of a positioning device has been initialized during a period from switching of the switch to the ON state to switching of the switch to the OFF state, and
the supply of the power to the storage unit is stopped in a case where the azimuth angle of the positioning device has not been initialized during the period from the switching of the switch to the ON state to the switching of the switch to the OFF state.

7. The power supply control method according to claim 1, wherein
the supply of the power to the storage unit is continued in a case where route information for automatic traveling registered in advance has been read by the work vehicle during a period from switching of the switch to the ON state to switching of the switch to the OFF state, and
the supply of the power to the storage unit is stopped in a case where the route information has not been read by the work vehicle during the period from the switching of the switch to the ON state to the switching of the switch to the OFF state.

8. The power supply control method according to claim 3, wherein
the supply of the power to the storage unit is stopped before the predetermined time elapses in a case where the power for the storage unit is equal to or less than a threshold even when the predetermined conditions are satisfied.

9. The power supply control method according to claim 3, wherein
in a case where the predetermined conditions are satisfied, the supply of the power to the storage unit is stopped when the predetermined time elapses after the switch is switched to the OFF state.

10. The power supply control method according to claim 3, wherein
the predetermined time is set according to the predetermined conditions.

11. The power supply control method according to claim 3, wherein
the predetermined time is set according to a state of the work vehicle when the switch is switched to the OFF state.

12. A power supply control method comprising:
storing positioning information in a positioning device by using power supplied from a battery in a case where a switch of a work vehicle is in an ON state; and
continuing supply of the power to the positioning device when predetermined conditions for starting automatic traveling are satisfied and stopping the supply of the power to the positioning device when the predetermined conditions are not satisfied, in a case where the switch is switched to an OFF state.

13. A power supply control method comprising:
storing information regarding automatic traveling in a storage unit by using power supplied from a battery in a case where a switch of a work vehicle is in an ON state;
receiving an operation of enabling or disabling a function of continuing supply of the power to the storage unit in a case where the switch is switched to an OFF state; and
continuing the supply of the power to the storage unit when the switch is switched to the OFF state in a case where the operation of enabling the function is received, and stopping the supply of the power to the storage unit when the switch is switched to the OFF state in a case where the operation of disabling the function is received.

14. A power supply control program for causing one or a plurality of processors to execute:
storing information regarding automatic traveling in a storage unit by using power supplied from a battery in a case where a switch of a work vehicle is in an ON state; and
continuing supply of the power to the storage unit when predetermined conditions for starting automatic traveling are satisfied and stopping the supply of the power to the storage unit when the predetermined conditions are not satisfied, in a case where the switch is switched to an OFF state.

15. A power supply control system comprising:
a storage processing unit that stores information regarding automatic traveling in a storage unit by using power supplied from a battery in a case where a switch of a work vehicle is in an ON state; and
a retention processing unit that continues supply of the power to the storage unit when predetermined conditions for starting automatic traveling are satisfied and stops the supply of the power to the storage unit when the predetermined conditions are not satisfied, in a case where the switch is switched to an OFF state.
